Europäisches Patentamt

European Patent Office

Office européen des brevets

(11) Numéro de publication: **0 221 220**
**A1**

(12) **DEMANDE DE BREVET EUROPEEN**

(21) Numéro de dépôt: 85402102.9

(22) Date de dépôt: 31.10.85

(51) Int. Cl.⁴: **B01J 20/00 , C09K 17/00**

(43) Date de publication de la demande:
**13.05.87 Bulletin 87/20**

(84) Etats contractants désignés:
**AT BE CH DE FR GB IT LI LU NL SE**

(71) Demandeur: **Biez, Georges**
**La Perrière**
**F-74580 Viry(FR)**

(72) Inventeur: **Biez, Georges**
**La Perrière**
**F-74580 Viry(FR)**

(74) Mandataire: **Gillard, Marie-Louise et al**
**Cabinet Beau de Loménie 55, Rue**
**d'Amsterdam**
**F-75008 Paris(FR)**

(54) **Procédé d'obtention de granulats, à pouvoir d'absorption et de rétention de liquide élevé, lesdits granulats et leur utilisation, notamment en agriculture.**

(57) La présente invention a pour objet un procédé d'obtention de granulats, à pouvoir d'absorption et de rétention de liquide élevé. Ledit procédé consiste en l'agglomération, sous une certaine pression d'un mélange spécifique de produits naturels (poudres de roches, argiles, fibres, ...) et en un traitement thermique du mélange ainsi conditionné.

Les granulats obtenus par ledit procédé sont avantageusement utilisés en agriculture, notamment pour la valorisation des sols sableux.

EP 0 221 220 A1

## Procédé d'obtention de granulats, à pouvoir d'absorption et de rétention de liquide élevé, lesdits granulats et leur utilisation, notamment en agriculture.

La présente invention a pour objet un procédé d'obtention de granulats, à pouvoir d'absorption et de rétention de liquide élevé. Lesdits granulats, qui font partie intégrante de la présente invention, sont à base de poudres de roches et de produits cellulosiques.

Grâce à leur pouvoir d'absorption et de rétention d'eau, ils sont avantageusement utilisés pour la valorisation de sols, qui auparavant, ne permettaient pas l'agriculture par leur instabilité et leur pouvoir très filtrant.

Par apport de ces produits de rétention d'eau, il est entre autre possible de valoriser les terres sableuses, les sables du désert ou des zones désertiques, notamment au Moyen-Orient. Les sols renfermant lesdits produits de rétention d'eau peuvent retenir toute l'humidité nécessaire à la culture, notamment d'agrumes et de plantes maraîchères.

L'invention se propose donc d'apporter une solution, au moins partielle, au problème de la sécheresse à la surface du globe, problème accentué, on le sait, par les excès de déboisement.

Des solutions du même type ont également été envisagées. Il a notamment été proposé de réaliser des produits de rétention d'eau, à partir de résines de synthèse. Mais, jusqu'à ce jour, aucune résine de synthèse ne s'est avérée capable de résister un temps très long aux bactéries anaérobies et aérobies, qui interviennent obligatoirement dans les sols au moment des cultures. D'autre part, on encourt des risques de pollution en utilisant de telles résines, que lesdites bactéries ne manquent pas de transformer.

Ainsi, selon la présente invention, on a mis au point un procédé d'obtention de granulats, à pouvoir d'absorption et de rétention de liquide élevé, à partir de produits naturels. Une série de poudres de roche, d'argiles naturelles, de fibres naturelles a été sélectionnée, permettant l'élaboration de véritables petites éponges qui, distribuées dans le sol, gardent l'humidité. Lesdites éponges servent également de supports à divers produits qui peuvent être amenés avec l'eau : engrais, insecticides, ...

Le procédé selon l'invention consiste en l'agglomération sous une certaine pression d'un mélange spécifique de produits naturels et en un traitement thermique du mélange ainsi conditionné.

Il est caractérisé en ce qu'il consiste :

a) à mélanger au moins un carbonate de calcium, des petites fibres et grandes fibres de celluloses ou des flocages de coton, au moins une argile naturelle et au moins un composé choisi parmi les plâtres fins de construction ou les gypses de carrières, pour obtenir une masse primaire ;

b) à soumettre ladite masse primaire à un broyage éventuel pour l'amener à une granulométrie choisie ;

c) à incorporer dans la masse primaire éventuellement broyée, au moins un adjuvant choisi parmi le chlorure de calcium, la chaux vive, le sulfate de calcium, le chlorure de chaux, la fleur de chaux ou le carbonate de calcium, pour obtenir une masse secondaire ayant une teneur en eau d'environ 25 à 50 % en poids, si besoin après ajustage de la teneur en eau à un stade quelconque ;

d) à conditionner ladite masse secondaire sous la forme désirée par compression avant de la soumettre à un traitement thermique, à une température d'environ 250 à 500°C, pour cristallisation ; un liant en poudre de cellulose pure étant en outre ajouté à la masse primaire ou à la masse secondaire.

Les ingrédients entrant dans la composition de la masse primaire réalisée à l'étape a) du procédé selon l'invention peuvent être utilisés très purs. Toutefois, comme un degré élevé de pureté n'est pas critique, on pourra avantageusement utiliser des sources disponibles et bon marché, de la plupart de ces ingrédients, tels des produits de l'on trouve chez les grossistes ou dans les carrières, notamment des résidus de carrières non polluées.

Lesdits produits doivent évidemment, dans la mesure du possible, être exempts de souillure pathogène. Les granulats obtenus y gagnent en stabilité.

Le carbonate de calcium peut donc être utilisé pur, mais on peut également utiliser des résidus de sa fabrication ou des sources naturelles en contenant, telles que les craies, les dolomites et les lipotomes.

De la même façon, on peut utiliser comme source de plâtre des résidus de fabrication du semi-hydrate de sulfate de calcium et comme source de produits cellulosiques (petites et grandes fibres de cellulose) les boues riches en cellulose rejetées par les usines de fabrication du papier.

Dans cette description et dans les revendications, les termes et expressions cellulose, semi-hydrate de sulfate de calcium et carbonate de calcium seront donc utilisés pour désigner aussi bien des produits purs que les sources les contenant (produits de récupération, sources naturelles et résidus de fabrication).

Toutefois, pour remplacer les fibres des cellulose, il est à déconseiller d'employer des poudres de bois ou des sciures de bois, qui, avec le temps et l'humidité, s'auto-détruisent et provoquent des moisissures, nuisibles à l'enrichissement de la terre.

Pour ce qui est des produits cotonneux, on emploie obligatoirement des flocages de coton, qui ne doivent en aucun cas avoir été mélangés ou contenir, même un faible pourcentage de fibres synthétiques. Lesdits flocages seront donc au moins de troisième ordre.

En ce qui concerne le ou les produits argileux, entrant dans la composition de la masse primaire, on les choisit parmi les argiles blanches (kaolin), les sépiolites et leurs dérivés (argillomurite, kinsite, magnésite), la zéolite et ses dérivés (philippsite, chabazite, natrolite), l'attapulgite et ses dérivés - (chabazite, laumontite, natrolite, mésolite, mésotype, mordenite, gadolinite, apophyllite, keulanalite, okénite).

Ladite masse primaire contient les éléments de base des granulats selon l'invention : les fibres cellulosiques en constituent l'armature, les autres ingrédients interviennent à titre de charge et/ou de liants.

Conformément à l'invention, la masse primaire peut être obtenue, en mélangeant :
-30 % en poids de carbonate de calcium,
-30 % en poids de petites et grandes fibres de cellulose ou flocages de coton,
-10 % en poids d'argile, et
-30 % en poids de plâtres fins de construction.

Ces derniers 30 % peuvent également être constitués pour les 2/3 de plâtres fins de construction et pour le tiers restant de gypse.

Ladite masse primaire peut contenir en outre un liant en poudre de cellulose pure. Comme indiqué ci-dessus, ledit liant peut également être ajouté à l'étape c) du procédé selon l'invention dans la masse secondaire. En réalité, il ne s'agit pas d'un véritable liant, mais plutôt d'un colloïdal qui permet, pendant le temps de passage dans la presse et la cristallisation dans le four, de maintenir toutes les particules minérales ensemble. Le colloïdal employé est généralement de la carboxyméthyl cellulose ou un équivalent : dérivé similaire à base de cellulose, par exemple des méthylcelluloses ou tyloses. Il intervient généralement à raison de 2 à 20 % en poids de la masse à lier. Sa proportion est en fait choisie en fonction du pouvoir absorbant et du degré de résistance mécanique - (résistance d'agglomération) souhaités pour le produit final.

L'homme de métier déterminera aisément cette proportion, sachant que plus cette dernière est élevée, plus le pouvoir absorbant sera faible et plus le degré de résistance mécanique sera élevé.

Eventuellement,ladite masse primaire peut également contenir des adjuvants de réglage de densité et d'absorption. Ces adjuvants sont des produits du type de ceux intervenant déjà dans la composition de ladite masse primaire. Pour le réglage de la densité, on peut choisir ledit adjuvant dans le groupe comprenant la silice, la magnésie, le sulfate de baryte ou des argiles... Il est évident qu'en faisant varier la proportion des constituants principaux de ladite masse primaire, on influe également sur la densité et la capacité d'absorption des granulats obtenus.

La masse primaire est obtenue par mélange de ses constituants par exemple dans un mélangeur horizontal, type mélangeur à ruban.

On recherche une bonne homogénéisation.

Ladite masse est éventuellement broyée. Elle est généralement réduite en une poudre présentant une granulométrie de 100 à 200 microns.

Ensuite, on constitue à partir de ladite masse primaire éventuellement broyée, la masse secondaire. L'adjuvant qui intervient à cette étape c) du procédé selon l'invention peut être constitué par du chlorure de calcium, de la chaux vive, du sulfate de calcium, du chlorure de chaux, de la fleur de chaux ou du carbonate de calcium de pureté élevée. Le degré de pureté de ces composants n'étant toutefois pas critique, il est économiquement plus intéressant d'utiliser des sources de ces composants telles que des résidus de fabrication desdits composants et/ou, s'ils existent, des produits naturels les contenant. Dans la présente demande, les expressions chlorure de calcium, chaux vive, sulfate de calcium, chlorure de chaux, fleur de chaux et carbonate de calcium viseront donc aussi bien les produits purs que les sources les contenant (produits de récupération, résidus de fabrication et sources naturelles).

Quant à la proportion en adjuvant à ajouter à la masse primaire, elle variera évidemment en fonction de la nature de l'adjuvant. Ainsi les proportions en % en poids par rapport à la masse primaire seront comme suit :
-chlorure de calcium 3 à 30
-chaux vive 0,3 à 2
-sulfate de calcium 2 à 15
-chlorure de chaux 5 à 15
-fleur de chaux 5 à 30
-carbonate de calcium 20 à 80.

Ledit adjuvant intervient encore à titre de charge et/ou de liant.

La masse secondaire obtenue doit impérativement présenter une teneur en eau d'environ 25 à 50 % en poids, avant de subir le traitement thermique à l'étape d) du procédé selon l'invention.

Les ingrédients mis en oeuvre pour réaliser la masse primaire contenant généralement de l'eau, en particulier dans le cas de la cellulose, il suffira d'ajouter la quantité d'eau nécessaire pour atteindre la teneur finale désirée et ce, à un moment quelconque des étapes a), b) et c).

La présence d'une telle quantité d'eau est impérative. D'une part, elle permet d'assurer une bonne homogénéisation du mélange et, d'autre part, elle évite au cours du traitement thermique la combustion des matériaux combustibles - (cellulose). Ledit traitement thermique doit être réalisé dans une atmosphère de vapeur d'eau. Ladite vapeur d'eau est créée par l'évaporation de l'eau contenue dans la masse secondaire. La masse secondaire doit également être parfaitement homogène, elle peut être réalisée dans un mélangeur vertical à palette.

Avant le traitement thermique, ladite masse secondaire passe par un granulateur où se forme les agrégats de la grosseur que l'on désire, agrégats que l'on soumet à une pression de 150 à 600 bars. On réalise généralement des agrégats ayant un diamètre leur permettant d'être distribués par des semoirs dont se servent les agriculteurs ou par des distributeurs rotatifs attelés.

Les granulats obtenus subissent alors le traitement thermique, à une température de 250 à 500°C. Une température supérieure à environ 250°C est nécessaire pour assurer une bonne cristallisation des granulats selon l'invention. Il convient toutefois de ne pas dépasser 500°C, température au-delà de laquelle les matériaux combustibles - (cellulose) seraient consommés.

La durée de ce traitement thermique dépend du pouvoir absorbant désiré pour les produits finals et varie généralement entre environ 20 et 45 minutes.

Ce traitement thermique peut être réalisé de manière classique en faisant appel à des fours bien connus, par exemple à chauffage direct, tels que les fours rotatifs ou les fours constitués par un tube horizontal dans lequel le produit à traiter progresse de l'entrée à la sortie sous l'effet d'une vis sans fin disposée dans l'axe longitudinal dudit tube, les divers paramètres de ces fours étant choisis en fonction des conditions de température et de durée désirées pour le traitement thermique.

A la sortie du four, les granulats sont refroidis à la température ambiante et stockés à l'abri de toute humidité, ces derniers ayant évidemment tendance à absorber très rapidement l'hygrométrie ambiante.

Les granulats obtenus selon le procédé de l'invention ont un pouvoir de rétention d'eau d'autant plus élevé que la durée du traitement thermique à l'étape d) est plus courte et que la quantité de liant mis en jeu est plus faible.

Les produits à pouvoir de rétention d'eau très élevé peuvent être utilisés avantageusement dans les sables des déserts qui ont plus besoin que des terres sableuses, par exemple, de retenir l'eau. On a déjà indiqué que lesdits produits servent également de support à des engrais, des produits insecticides...

Les produits à pouvoir de rétention d'eau plus faible peuvent avantageusement être utilisés dans des terres sableuses qui ont déjà une structure moléculaire argileuse et qui n'ont besoin principalement que de pouvoir drainer de trop grandes quantités d'eau à certains moments.

L'intervention des produits selon l'invention permet tout de même auxdits terrains sableux de conserver une humidité constante.

Le procédé selon l'invention permet la fabrication de granulats absorbant aisément leur poids en eau, voire plus (1,4 fois celui-ci).

L'invention sera mieux comprise à la lecture de l'exemple qui suit. Ledit exemple est donné à titre d'illustration et n'est nullement limitatif.

On réalise dans un mélangeur horizontal, type mélangeur à ruban, un mélange contenant environ :

-30 % en poids de boues de pâte à papier. Les boues utilisées contiennent environ 25 à 30 % de petites et grandes fibres de cellulose,
-30 % en poids de carbonate de calcium,
-10 % en poids de bentonite (argile), et
-30 % en poids de plâtres fins de construction.

La masse primaire ainsi obtenue est passée directement au broyeur à marteaux. Elle est réduite en une poudre présentant une granulométrie d'environ 100 à 200 microns.

La poudre ainsi obtenue est alors passée dans un mélangeur vertical à palette du type SCHUGI. Dans ledit mélangeur, on lui incorpore, en poids :
-27 % d'eau
-2 % de chaux vive et
-5 % de carboxy-méthyl cellulose.

Le mélange résultant est introduit dans un granulateur rotatif, pour en faire des petits granulats genre aliments pour bétail. Lesdits granulats sont soumis à une pression pouvant varier de 300 à 600 bars.

Ensuite, ils sont acheminés dans un four rotatif, où ils sont soumis pendant 25 minutes à un choc thermique voisinant au départ 350°C et vers la sortie du four environ 150°C.

**Revendications**

1. Procédé d'obtention de granulats, à pouvoir d'absorption et de rétention de liquide élevé, caractérisé en ce qu'il consiste :

a) à mélanger au moins un carbonate de calcium, des petites fibres et grandes fibres de celluloses ou des flocages de coton, au moins une argile naturelle et au moins un composé choisi parmi les plâtres fins de construction ou les gypses de carrières, pour obtenir une masse primaire ;

b) à soumettre ladite masse primaire à un broyage éventuel pour l'amener à une granulométrie choisie ;

c) à incorporer dans la masse primaire éventuellement broyée, au moins un adjuvant choisi parmi le chlorure de calcium, la chaux vive, le sulfate de calcium, le chlorure de chaux, la fleur de chaux ou le carbonate de calcium, pour obtenir une masse secondaire ayant une teneur en eau d'environ 25 à 50 % en poids, si besoin après ajustage de la teneur en eau à un stade quelconque ;

d) à conditionner ladite masse secondaire sous la forme désirée par compression avant de la soumettre à un traitement thermique, à une température d'environ 250 à 500°C, pour cristallisation ; un liant en poudre de cellulose pure étant en outre ajouté à la masse primaire ou à la masse secondaire.

2. Procédé selon la revendication 1, caractérisé en ce que, comme apport de fibres de cellulose on utilise les boues riches en celluloses rejetées par les usines de fabrication de papier.

3. Procédé selon l'une des revendications 1 ou 2, caractérisé en ce que l'argile est choisie parmi les argiles blanches, les sépiolites et leurs dérivés, la zéolite et ses dérivés, l'attapulgite et ses dérivés.

4. Procédé selon l'une quelconque des revendications 1 à 3, caractérisé en ce que le liant en poudre de cellulose pure ajouté à la masse primaire ou à la masse secondaire est de la carboxyméthyl cellulose ou un dérivé similaire à base de cellulose et intervient à raison d'environ 2 à 20 % en poids de la masse à lier.

5. Procédé selon l'une quelconque des revendications 1 à 4, caractérisé en ce que la masse primaire contient en outre des adjuvants de réglage de densité et d'absorption.

6. Procédé selon l'une quelconque des revendications 1 à 5, caractérisé en ce qu'on réalise la masse primaire en mélangeant environ 30 % en poids de carbonate de calcium, 30 % en poids de petites et grandes fibres de cellulose ou flocages de coton, 10 % en poids d'argile et 30 % en poids de plâtres fins de construction ou 20 % en poids desdits plâtres et 10 % en poids de gypses.

7. Procédé selon l'une quelconque des revendications 1 à 6, caractérisé en ce que la masse primaire est soumise à un broyage l'amenant à une granulométrie choisie entre environ 100 et 200 microns.

8. Procédé selon l'une quelconque des revendications 1 à 7, caractérisé en ce que l'adjuvant intervenant à l'étape c) est du chlorure de calcium, de la chaux vive, du sulfate de calcium, du chlorure de chaux, de la fleur de chaux ou du carbonate de calcium, utilisé respectivement à raison de 3 à 30 ; 0,3 à 2 ; 2 à 15 ; 5 à 15 ; 5 à 30 ; 20 à 80 % en poids par rapport à la masse primaire.

9. Granulats caractérisés en ce qu'ils sont obtenus conformément au procédé selon l'une quelconque des revendications 1 à 8.

10. Utilisation des granulats selon la revendication 9, pour la valorisation des terrains sableux, des sables du désert ou de zones désertiques,

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| E | FR-A-2 570 621 (G. BIEZ) <br> * Page 1, lignes 3-7,13-19,27-34; page 2, lignes 1-17 et ligne 25; page 3, lignes 1-4, 21-36; page 4, lignes 1-30; page 5, lignes 25-34; page 6, lignes 30-34; revendications 1-10 * <br> --- | 1-10 | B 01 J 20/00 <br> C 09 K 17/00 |
| X,Y | EP-A-0 039 522 (J. KOK) <br> * Page 1, lignes 3-5, 15-20; page 2, lignes 2-24; page 4, lignes 14-18; revendications 1,2,4 * <br> --- | 1-4,9 | |
| A | US-A-4 403 891 (S. OHOKA) <br> * Colonne 2, lignes 24-68; colonne 3, lignes 43-60; colonne 4, lignes 12-34 * <br> --- | 1-4,10 | |
| A | WO-A-8 303 255 (SKAMOL SKARREHAGE) <br> * Page 2, lignes 27-30; page 3, lignes 1-27; revendications 1-4 * <br> ----- | 1,3 | DOMAINES TECHNIQUES RECHERCHES (Int. Cl.4) <br><br> C 09 K <br> A 01 K |

Le présent rapport de recherche a été établi pour toutes les revendications

| Lieu de la recherche <br> LA HAYE | Date d'achèvement de la recherche <br> 10-07-1986 | Examinateur <br> BOULON A.F.J. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82